# EUROPÄISCHE PATENTSCHRIFT

(11) **EP 2 884 310 B1**
(45) Veröffentlichungstag und Bekanntmachung des Hinweises auf die Patenterteilung: **08.06.2016**
(21) Anmeldenummer: 13197523.7
(22) Anmeldetag: 16.12.2013
(51) Int. Cl.: G01V 8/20

(54) **Lichtgitter**
Light grid
Barrière lumineuse

(43) Veröffentlichungstag der Anmeldung: 17.06.2015
(73) Patentinhaber: SICK AG, 79183 Waldkirch (DE)
(72) Erfinder: Paske, Ralf, 79183 Waldkirch (DE); Wehrle, Klemens, 79297 Winden (DE)
(74) Vertreter: Ludewigt, Christoph

(56) Entgegenhaltungen:
- EP-A1- 1 437 542
- EP-A2- 1 396 734
- DE-A1-102009 031 855
- DE-U1-202011 050 083
- DE-U1-202012 101 032
- US-A- 6 166 371
- US-A1- 2012 086 951
- US-B1- 6 496 273
- US-B1- 6 600 153

## Beschreibung

Die Erfindung betrifft ein Lichtgitter gemäß dem Oberbegriff des unabhängigen Patentanspruchs 1.

Herkömmliche Lichtgitter bzw. Lichtgitterpaare können zur Vermessung von Objekten auf einem Förderband benutzt werden, wobei die messenden Lichtgitter in horizontaler und vertikaler Ausrichtung an das Förderband montiert werden können.

Die Lichtgitter mit vertikal ausgerichteter Messrichtung werden vorzugsweise an einem Übergang zwischen zwei Förderbandabschnitte angeordnet. Hierbei weist der Übergang einen Spalt auf, der nur so groß ist, um die Lichtstrahlen der Lichtgitter durchzulassen.

Solch eine Anordnung hat den Nachteil, dass herabfallender Förderband-Abrieb, lose Teile des Förderguts oder Staub die optische Fläche eines unterhalb des Förderbands montierten Lichtgitters verschmutzen können und somit die Betriebsbereitschaft des Lichtgitters gefährden.

Aus der DE 10 2009 031 855 A1 ist eine Vorrichtung zum Sauberhalten einer optischen Fläche eines Sensors bekannt, bei der aus zwei unterschiedlichen waagerecht zu der optischen Fläche angeordneten Düsen Druckluft mit unterschiedlichen Austrittgeschwindigkeiten ausstritt, so dass die optische Fläche des Sensors gesäubert wird. Hierbei wird die Vorrichtung auf den Sensor montiert und Druckluft durch zwei Ausblasdüsen mit unterschiedlichen Geschwindigkeiten parallel zu einer Detektionsgrenzfläche des Sensors geblasen.

DE 20 2011 050083 U1 offenbart ein Lichtgitter mit den Merkmalen des Oberbegriffs des unabhängigen Patentanspruchs 1, wobei das Gehäuse dazu dient, das Lichtgitter gegen mechanische Belastungen zu schützen und einen Zugang zu den Lichtsendeeinheiten und/oder Lichtempfangseinheiten zu ermöglichen.

EP 1 437 542 A1 offenbart ein Lichtgitter, bei dem Zielmarken an einer Empfängereinheit vorgesehen sind, so dass durch Anvisieren der Zielmarken mittels Sendelemente einer Sendereinheit ein Justieren des Lichtgitters erleichtert ist.

US 6,600,153 B1 offenbart eine staubdichte Vorrichtung für einen optischen Sensor zum Detektieren von vorbeiströmenden Substanzen, wie z.B. Tabletten oder Schrauben. Hierbei weist die staubdichte Vorrichtung ein Gehäuse auf, das aus zwei Luftkammern besteht und einen ausgesendeten Lichtstrahl des Sensors umschließt.

Es ist eine Aufgabe der Erfindung, ein Lichtgitter der eingangs genannten Art derart zu verbessern, dass ohne komplexen mechanischen Mehraufwand ein Verschmutzen der optischen Fläche des Lichtgitters vermieden und somit eine Betriebsbereitschaft des Lichtgitters verlängert werden kann.

Diese Aufgabe wird erfindungsgemäß gelöst durch ein Lichtgitter mit den Merkmalen des unabhängigen Patentanspruchs 1, insbesondere durch eine die Lichtsendeeinheiten und/oder Lichtempfangseinheiten umschließende Überdruckeinheit zum Bereitstellen von Druckluft, wobei die Überdruckeinheit Öffnungen, die koaxial zu den optischen Achsen der Lichtsendeeinheiten bzw. Lichtempfangseinheiten angeordnet sind, und einen Überdruckanschluss aufweist und derart ausgebildet ist, dass eingeleitete Druckluft in Richtung der Öffnungen leitbar und ausschließlich durch diese Öffnungen austretbar ist.

Gemäß einem bevorzugten Ausführungsbeispiel ist der Überdruckanschluss an einem Ende des Gehäuses vorgesehen. Durch eine einseitige Zufuhr der Druckluft ist es möglich, auf einfache Weise eine laminare Strömung in der Überdruckeinheit herzustellen und eine konstante Ausströmung aus den Öffnungen zu erzielen.

Gemäß einem weiteren bevorzugten Ausführungsbeispiel weist die Überdruckeinheit einen Zylinder auf, der das Gehäuse des Lichtgitters ummantelt und zwischen einer Endbuchse und dem Überdruckanschluss angeordnet ist. Dies hat den zusätzlichen Vorteil, dass das Lichtgitter und insbesondere das Gehäuse des Lichtgitters durch den Zylinder vor mechanischen Schäden geschützt sind.

Gemäß einem weiteren bevorzugten Ausführungsbeispiel ist die Druckluft zwischen dem Gehäuse des Lichtgitters und einer Innenwand des Zylinders vorgesehen und tritt ausschließlich durch die Öffnungen auf dem Zylinder aus.

Gemäß einem weiteren bevorzugten Ausführungsbeispiel ist die Überdruckeinheit aus dem Zylinder, der Endbuchse und dem Überdruckanschluss gebildet.

Gemäß einem weiteren bevorzugten Ausführungsbeispiel sind die Öffnungen auf der Längsseite des Lichtgitters vorgesehen und der Überdruckanschluss ist als Flanschgehäuse am Gehäuse des Lichtgitters angebracht, so dass die Überdruckeinheit integral in dem Lichtgitter eingebaut ist.

Gemäß einem weiteren bevorzugten Ausführungsbeispiel weist die Überdruckeinheit durchsichtiges Plexiglas auf. Dadurch wird der Betrieb des Lichtgitters, insbesondere das Aussenden und Empfangen der Lichtstrahlen, nicht beeinträchtigt.

Gemäß einem weiteren bevorzugten Ausführungsbeispiel nimmt ein Durchmesser der Öffnungen zum Auslassen der Druckluft mit zunehmendem Abstand zu den Lichtsendeeinheiten oder den Lichtempfangseinheiten derart ab, so dass die durch die Öffnungen strömende Druckluft an Geschwindigkeit zunimmt. Hierdurch ergibt sich der Vorteil, dass Schmutzteile ausreichend abgehalten werden, sich der optischen Fläche des Lichtgitters anzunähern.

Gemäß einem weiteren bevorzugten Ausführungsbeispiel sind die Lichtempfangseinheiten zum Empfangen der Lichtstrahlen neben den Lichtsendeeinheiten zum Aussenden der Lichtstrahlen im Lichtgitter abwechselnd angeordnet, und die den Lichtsendeeinheiten zugeordneten Öffnungen sind ebenfalls abwechselnd und in Reihe zu den den Lichtempfangseinheiten zugeordneten Öffnungen angeordnet, wobei das Lichtgitter einem Reflektor gegenüberliegend angeordnet ist.

Gemäß einem weiteren bevorzugten Ausführungsbeispiel sind die Lichtsendeeinheiten in einem Gehäuse und die Lichtempfangseinheiten in einem anderen Gehäuse vorgesehen, und beide Gehäuse sind gegenüberliegend angeordnet. Somit sind zwei unterschiedliche Messprinzipien, Reflexions-Messprinzip und Senden-Empfang-Messprinzip, bei dem erfindungsgemäßen Lichtgitter anwendbar.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung eines Anordnungsbeispiels eines Lichtgitters zur Objektvermessung in vertikaler Messrichtung;
- Fig. 2: eine schematische Darstellung eines erfindungsgemäßen Lichtgitters;
- Fig. 2a: eine schematische Teilansicht eines Lichtgitters gemäß Fig. 2 im Betrieb;
- Fig. 3: eine schematische Teilansicht eines Ausführungsbeispiels eines nicht-erfindungsgemäßen Lichtgitters;
- Fig. 4: eine schematische Darstellung des Ausführungsbeispiels gemäß Fig. 3 im Betrieb;
- Fig. 5: eine schematische Teilansicht eines weiteren Ausführungsbeispiels eines erfindungsgemäßen Lichtgitters;
- Fig. 6: eine schematische Darstellung des Ausführungsbeispiels gemäß Fig. 5 im Betrieb.

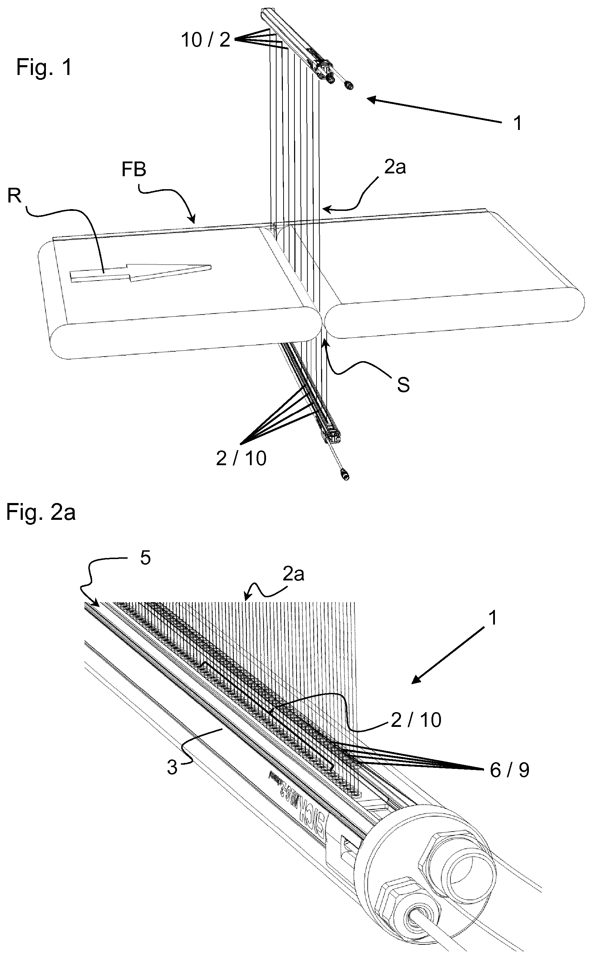

In der Figur 1 ist eine Anwendung eines Lichtgitters 1 bzw. eines Lichtgitterpaares zur Objektvermessung dargestellt. Hierbei werden Objekte auf einem Förderband FB in einer Förderrichtung R transportiert und an zwei in vertikaler Messrichtung gegenüberliegend angeordneten Lichtgittern 1 vorbeigeführt. D. h. ein Lichtgitter 1 ist unterhalb und ein Lichtgitter 1 ist oberhalb des Förderbands FB montiert.

An der Position der Lichtgitter 1 bzw. des Lichtgitterpaares weist das Förderband FB einen marginal kleinen Spalt S auf, durch den Lichtstrahlen 2a der Lichtgitter 1 durchtreten, so dass ein durch die Lichtstrahlen 2a geförderte Objekt vermessen werden kann.

Die Anordnung der Lichtgitter 1 besteht aus einem unterhalb des Förderbands FB montierten Lichtgitter 1 mit in einer Reihe angeordneten Lichtsendeeinheiten 2, die zum Aussenden von Lichtstrahlen 2a vorgesehen sind, und einem oberhalb des Förderbands FB montierten Lichtgitter 1 mit in einer Reihe angeordneten Lichtempfangseinheiten 10, die zum Empfangen der Lichtstrahlen 2a vorgesehen sind. Alternativ könnte auch eine umgekehrte Anordnung der Lichtgitter 1 wie eben beschrieben, Lichtgitter 1 mit in einer Reihe angeordneten Lichtsendeeinheiten 2 oberhalb des Förderbands FB und Lichtgitter 1 mit in einer Reihe angeordneten Lichtempfangseinheiten 10 unterhalb des Förderbands FB, anwendbar sein. Solch beschriebene Anordnung basiert auf dem Sender-Empfänger-Messprinzip.

Alternativ können die Lichtempfangseinheiten 10 zum Empfangen der Lichtstrahlen 2a neben den Lichtsendeeinheiten 2 zum Aussenden der Lichtstrahlen 2a in einem Lichtgitter 1 abwechselnd angeordnet sein. Ferner könnte ein derartiges Lichtgitter 1 mit Lichtsendeeinheiten 2 und Lichtempfangseinheiten 10 unterhalb des Förderbands FB und gegenüberliegend eines oberhalb des Förderbands FB angeordneten Reflektors montiert sein, so dass das Reflexion-Messprinzip angewendet werden kann.

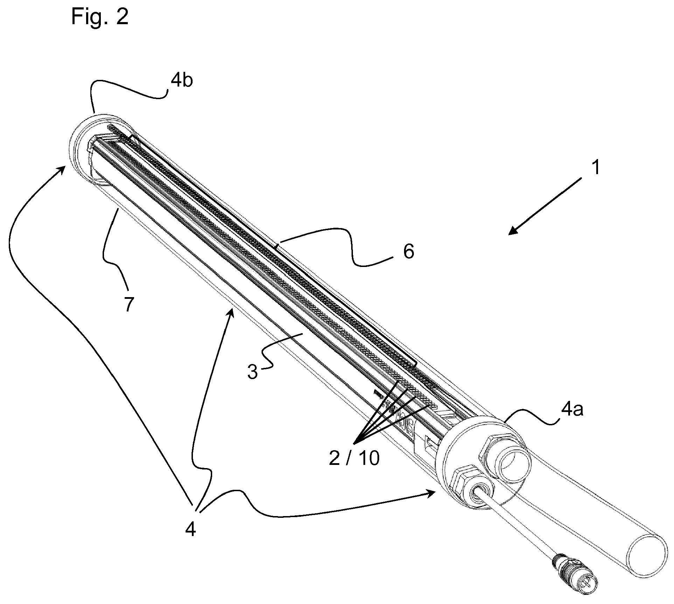

Das erfindungsgemäße Lichtgitter 1 weist, wie in der Figur 2 dargestellt, ein Gehäuse 3 auf, das die Lichtsendeeinheiten 2 und/oder Lichtempfangseinheiten 10 behaust und eine Längsseite 5 aufweist, an der die Lichtstrahlen 2a durchgelassen werden. Die Längsseite 5 stellt eine optische Fläche des Lichtgitters 1 dar.

Eine Überdruckeinheit 4 zum Bereitstellen von Druckluft ist an dem Gehäuse 3 vorgesehen, wobei die Überdruckeinheit 4 Öffnungen 6, 9, die koaxial zu den optischen Achsen der Lichtsendeeinheiten 2 bzw. Lichtempfangseinheiten 10 angeordnet sind, und einen Überdruckanschluss 4a aufweist. Die Überdruckeinheit 4 ist derart ausgebildet, dass eingeleitete Druckluft in Richtung der Öffnungen 6, 9 leitbar und ausschließlich durch diese Öffnungen 6, 9 aus der Überdruckeinheit 4 austretbar ist.

An einem Ende des Gehäuses 3 ist der Überdruckanschluss 4a vorgesehen. Die Druckluft ist von einer Seite in die Überdruckeinheit 4 einleitbar, wodurch ein Druck in der Überdruckeinheit 4 aufgebaut wird. Die einseitige Zufuhr der Druckluft ermöglicht auf einfache Weise eine laminare Strömung in der Überdruckeinheit 4 und eine konstante Ausströmung aus den Öffnungen 6, 9.

Ein vorzugsweise durchsichtiger Zylinder 7 als Bestandteil der Überdruckeinheit 4 ist vorgesehen, der das Gehäuse 3 des Lichtgitters 1 ummantelt und zwischen einer Endbuchse 4b und dem Überdruckanschluss 4a angeordnet ist. Der Zylinder 7 weist die koaxial zu den optischen Achsen der Lichtsendeeinheiten 2 bzw. Lichtempfangseinheit 10 angeordneten Öffnungen 6, 9 auf.

Hierdurch treten die Lichtstrahlen 2a der Lichtsendeeinheiten 2 des Lichtgitters 1 wie die Druckluft der Überdruckeinheit 4 durch die Öffnungen 6, 9 aus, wie es in Figur 2a gezeigt ist. Im Falle, dass das Lichtgitter 1 Lichtempfangseinheiten 10 aufweist, treten die Lichtstrahlen 2a durch die Öffnungen 6, 9 in dem Lichtgitter 1 ein und die Druckluft tritt durch die gleichen Öffnungen 6, 9 aus. Somit ist die Druckluft zwischen dem Gehäuse 3 des Lichtgitters 1 und einer Innenwand des Zylinders 7 vorgesehen und tritt ausschließlich durch die Öffnungen 6, 9 auf dem Zylinder 7 aus.

Somit ist die Überdruckeinheit 4 aus dem vorzugsweise durchsichtigen Zylinder 7, der Endbuchse 4b und dem Überdruckanschluss 4a gebildet. Die optische Fläche des Lichtgitters 1 ist vor Verschmutzung bewahrt und das Lichtgitter 1 ist mechanisch durch den Zylinder 7 zusätzlich geschützt.

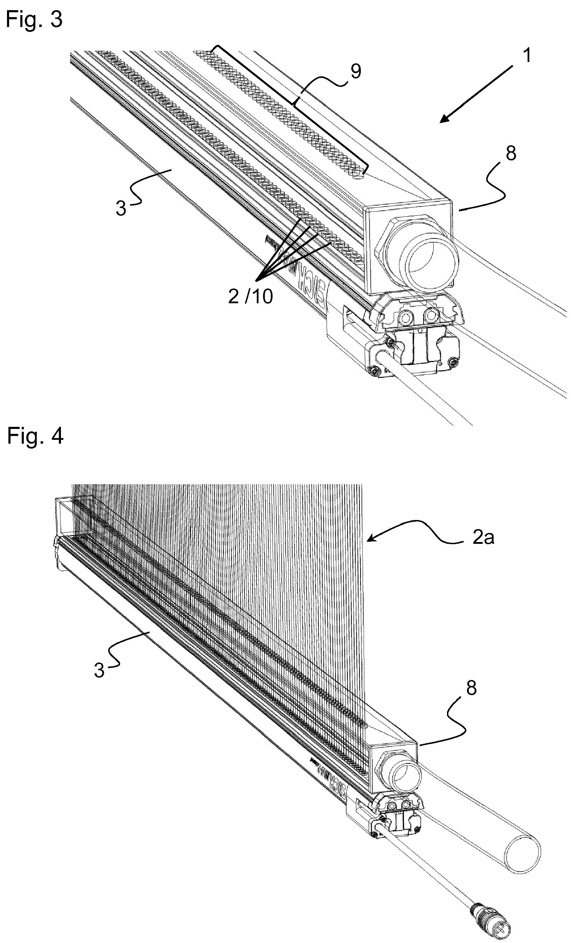

In der Figur 3 ist ein Ausführungsbeispiel eines nicht-erfindungsgemäßen Lichtgitters 1 schematisch dargestellt.

Das Lichtgitter 1 weist das Gehäuse 3 auf, in dem die Lichtsendeeinheiten 2 und/oder Lichtempfangseinheiten 10 behaust sind. Ein insbesondere teilweise durchsichtiges oder aus Plexiglas bestehendes Aufsatzgehäuse 8 ist mit Öffnungen 9 versehen, wobei das Aufsatzgehäuse 8 auf das Lichtgitter 1 derart montierbar ist, so dass die Öffnungen 9 des Aufsatzgehäuses 8 koaxial zu den optischen Achsen der Lichtsendeeinheiten 2 und/oder Lichtempfangseinheiten 10 des Lichtgitters 1 angeordnet sind - hier also koaxial zu den Lichtstrahlen 2a. Die Öffnungen 9 des Aufsatzgehäuses 8 sind zum Auslassen der Druckluft und Durchlassen der Lichtstrahlen 2a vorgesehen.

An einem Ende des Aufsatzgehäuses 8 ist der Überdruckanschluss 4a angebracht, so dass die Druckluft in das Aufsatzgehäuse 8 geleitet wird, um aus den Öffnungen 9 auszutreten.

Die Überdruckeinheit 4 wird bei diesem Ausführungsbeispiel aus dem Aufsatzgehäuse 8 und dem Überdruckanschluss 4a gebildet.

Im Betrieb strahlen die Lichtstrahlen 2a durch die optische Fläche des Lichtgitters 1 und durch die Öffnungen 9 des insbesondere teilweise durchsichtigen Aufsatzgehäuses 8 in Richtung des Förderbands FB, wie in der Figur 4 gezeigt. Das Aufsatzgehäuse 8 schützt das Lichtgitter 1 mechanisch und hält die optische Fläche des Lichtgitters 1 frei von Schmutzpartikeln.

Das Aufsatzgehäuse 8 kann auf das Lichtgitter 1 geklebt, verschweißt oder dergleichen sein. Vor der Montage kann das Aufsatzgehäuse 8 und somit auch die Öffnungen 9 des Aufsatzgehäuses 8 mit den optischen Achsen des Lichtgitters 1 mittels des Überdruckanschlusses 4a ausgerichtet werden. Vorteilhafterweise können Markierungen an dem Aufsatzgehäuse 8 und dem Lichtgitter 1 vorgesehen sein, so dass bei der Montage des Aufsatzgehäuses 8 an dem Lichtgitter 1 auf einfache Weise das Ausrichten der Öffnungen 9 des Aufsatzgehäuses 8 koaxial zu den optischen Achsen der Lichtsendeeinheiten 2 und/oder Lichtempfangseinheiten 10 des Lichtgitters 1 erfolgen kann.

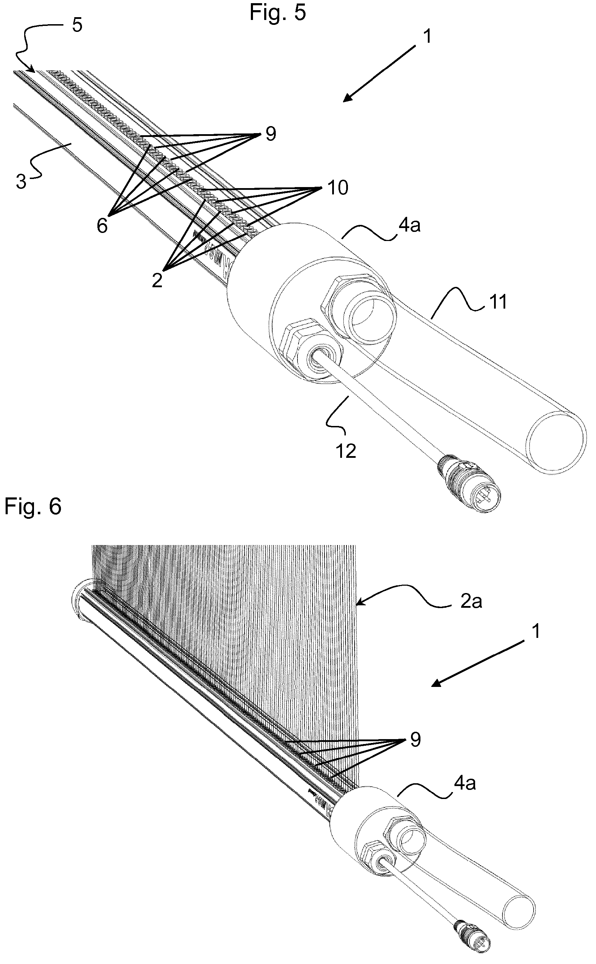

Bei einem weiteren erfindungsgemäßen Ausführungsbeispiel gemäß Figur 5 ist der Überdruckanschluss 4a direkt als Flanschgehäuse am Gehäuse 3 des Lichtgitters 1 angeordnet, so dass an dem Überdruckanschluss 4a sowohl eine Druckluftzuleitung 11 als auch eine Signalleitung 12 vorgesehen sind. Hierdurch können die Außenmaße des Lichtgitters 1 im Wesentlichen gleich gehalten werden.

Die Öffnungen 6 zum Auslassen der Druckluft sind auf der Längsseite 5 des Lichtgitters 1 in die optische Fläche vorgesehen, so dass die Überdruckeinheit 4 integral in dem Lichtgitter 1 eingebaut ist.

Vorteilhafterweise kann das Gehäuse 3 des Lichtgitters 1 mit der integrierten Überdruckeinheit 4 gleichzeitig Lichtsendeeinheiten 2 und Lichtempfangseinheiten 10 aufweisen, die abwechselnd zueinander angeordnet sind. Solch einem Lichtgitter 1 ist ein Reflektor gegenüberliegend angeordnet, so dass die Lichtstrahlen 2a reflektiert und bestimmt werden.

In der Figur 6 ist ein Lichtgitter 1 mit integrierter Überdruckeinheit 4 und am Flanschgehäuse aufgesetzten Überdruckanschluss 4a im Betrieb dargestellt, bei dem die Lichtstrahlen 2a durch die Öffnungen 9 der optischen Fläche der Längsseite 5 des Lichtgitters 1 austreten.

Vorzugsweise ist vorgesehen, dass ein Durchmesser der Öffnungen 6, 9 zum Auslassen der Druckluft mit zunehmenden Abstand zu den Lichtsendeeinheiten 2 oder den Lichtempfangseinheiten 10 derart abnimmt, so dass die durch die Öffnungen 6, 9 strömende Druckluft an Geschwindigkeit zu nimmt.

**Bezugszeichenliste**

| | | | |
|---|---|---|---|
| 1 | Lichtgitter | FB | Förderband |
| 2 | Lichtsendeeinheiten | R | Förderrichtung |
| 2a | Lichtstrahlen | S | Spalt |
| 3 | Gehäuse | | |
| 4 | Überdruckeinheit | | |
| 4a | Überdruckanschluss | | |
| 4b | Endbuchse | | |
| 5 | Längsseite | | |
| 6, 9 | Öffnungen | | |
| 7 | Zylinder | | |
| 8 | Aufsatzgehäuse | | |
| 10 | Lichtempfangseinheiten | | |
| 11 | Druckluftzuleitung | | |
| 12 | Signalleitung | | |

## Patentansprüche

1. Lichtgitter (1) mit
in einer Reihe angeordneten Lichtsendeeinheiten (2) zum Aussenden von Lichtstrahlen (2a) und/oder Lichtempfangseinheiten (10) zum Empfang der Lichtstrahlen (2a), und
einem Gehäuse (3), das die Lichtsendeeinheiten (2) und/oder Lichtempfangseinheiten (10) behaust und eine Längsseite (5) aufweist, an der die Lichtstrahlen (2a) durchgelassen werden, **gekennzeichnet durch** eine die Lichtsendeeinheiten (2) und/oder Lichtempfangseinheiten (10) umschließende Überdruckeinheit (4) zum Bereitstellen von Druckluft,
wobei die Überdruckeinheit (4) Öffnungen (6, 9), die koaxial zu den optischen Achsen der Lichtsendeeinheiten (2) bzw. Lichtempfangseinheiten (10) angeordnet sind, und einen Überdruckanschluss (4a) aufweist und derart ausgebildet ist, dass eingeleitete Druckluft in Richtung der Öffnungen (6, 9) leitbar und ausschließlich **durch** diese Öffnungen (6, 9) austretbar ist.

2. Lichtgitter nach Anspruch 1, wobei der Überdruckanschluss (4a) an einem Ende des Gehäuses (3) vorgesehen ist.

3. Lichtgitter nach einem der vorhergehenden Ansprüche, wobei die Überdruckeinheit (4) einen Zylinder (7) aufweist, der das Gehäuse (3) des Lichtgitters (1) ummantelt und zwischen einer Endbuchse (4b) und dem Überdruckanschluss (4a) angeordnet ist.

4. Lichtgitter nach Anspruch 3, wobei die Druckluft zwischen dem Gehäuse (3) des Lichtgitters (1) und einer Innenwand des Zylinders (7) vorgesehen ist und ausschließlich durch die Öffnungen (6, 9) auf dem Zylinder (7) austritt.

5. Lichtgitter nach Anspruch 3 oder 4, wobei die Überdruckeinheit (4) aus dem Zylinder (7), der Endbuchse (4b) und dem Überdruckanschluss (4a) gebildet ist.

6. Lichtgitter nach einem der vorhergehenden Ansprüche, wobei die Öffnungen (6) auf der Längsseite (5) des Lichtgitters (1) vorgesehen sind und der Überdruckanschluss (4a) als Flanschgehäuse am Gehäuse (3) des Lichtgitters (1) angebracht ist, so dass die Überdruckeinheit (4) integral in dem Lichtgitter (1) eingebaut ist.

7. Lichtgitter nach einem der vorhergehenden Ansprüche, wobei die Überdruckeinheit (4) durchsichtiges Plexiglas aufweist.

8. Lichtgitter nach einem der vorhergehenden Ansprüche, wobei ein Durchmesser der Öffnungen (6, 9) zum Auslassen der Druckluft mit zunehmendem Abstand zu den Lichtsendeeinheiten (2) oder den Lichtempfangseinheiten (10) derart abnimmt, so dass die durch die Öffnungen (6, 9) strömende Druckluft an Geschwindigkeit zunimmt.

9. Lichtgitter nach einem der vorhergehenden Ansprüche, wobei die Lichtempfangseinheiten (10) zum Empfangen der Lichtstrahlen (2a) neben den Lichtsendeeinheiten (2) zum Aussenden der Lichtstrahlen (2a) im Lichtgitter (1) abwechselnd angeordnet sind, und die den Lichtsendeeinheiten (2) zugeordneten Öffnungen (6) ebenfalls abwechselnd und in Reihe zu den den Lichtempfangseinheiten (10) zugeordneten Öffnungen (9) angeordnet sind, und wobei das Lichtgitter (1) einem Reflektor gegenüberliegend angeordnet ist.

10. Lichtgitter nach einem der vorhergehenden Ansprüche 1 bis 8, wobei die Lichtsendeeinheiten (2) in einem Gehäuse (3) und die Lichtempfangseinheiten (10) in einem anderen Gehäuse (3) vorgesehen sind, und beide Gehäuse (3) gegenüberliegend angeordnet sind.

## Claims

1. Light curtain (1) comprising
in a series arranged light transmitting units (2) for emitting light beams (2a) and / or light-receiving units (10) for receiving the light beams (2a), and a housing (3) that houses the light emitting units (2) and / or light-receiving units (10) and that comprises a longitudinal side (5) through which the light beams (2a) are passed, **characterized by** a positive pressure unit (4) for providing compressed air, the positive pressure unit (4) encloses the light emitting units (2) and / or light-receiving units (10),
wherein the positive pressure unit (4) comprises openings (6, 9), which are arranged coaxial to the optical axes of the light emitting units (2) and light receiving units (10), and a positive pressure port (4a), and is designed in such a way so that introduced compressed-air is guide-able in a direction to the openings (6, 9) and is exit-able exclusively through these openings (6, 9).

2. Light curtain according to claim 1, wherein the positive pressure port (4a) is provided at an end of the housing (3).

3. Light curtain according to one of the preceding claims, wherein the positive pressure unit (4) comprises a cylinder (7) which covers the housing (3) of the light curtain (1) and is arranged between an end socket (4b) and the positive pressure port (4a).

4. Light curtain according to claim 3, wherein the pressure is provided between the housing (3) of the light curtain (1) and an inner wall of the cylinder (7) and is exited exclusively through the openings (6, 9) of the cylinder (7).

5. Light curtain according to claim 3 or 4, wherein the positive pressure unit (4) is constituted by the cylinder (7), the end socket (4b) and the positive pressure port (4a).

6. Light curtain according to one of the preceding claims, wherein the openings (6) are provided on the longitudinal side (5) of the light curtain (1) and the positive pressure port (4a) is placed as flange enclosures at the housing (3) such that the positive pressure unit (4) is assembled integrally to the light curtain (1).

7. Light curtain according to one of the preceding claims, wherein the positive pressure unit (4) comprises transparent acrylic glass.

8. Light curtain according to one of the preceding claims, wherein a diameter of the openings (6, 9) for discharging the compressed-air decreases with increasing distance to the light transmitting units (2) or the light receiving units (10) in such a way so that the compressed-air flowing through the openings (6, 9) increases in speed.

9. Light curtain according to one of the preceding claims, wherein the light receiving units (10) for receiving the light beams (2a) are alternately arranged in the light curtain (1) adjacent the light emitting units (2) for emitting the light beams (2a) and the openings (6) being assigned to the light emitting units (2) are also alternately arranged and in series with the openings (9) being assigned to the light receiving units (10), and wherein the light curtain (1) is arranged oppositely to a reflector.

10. Light curtain according to one of the preceding claims 1 to 8, wherein the light emitting units (2) are provided in a housing (3) and the light receiving units (10) are provided in another housing (3), and both housing (3) are arranged oppositely.

## Revendications

1. Barrière lumineuse (1) comprenant
des unités émettrices de lumière (2), agencées dans une rangée, pour émettre des rayons de lumière (2a) et/ou des unités réceptrices de lumière (10) pour recevoir les rayons de lumière (2a), et
un boîtier (3), qui abrite les unités émettrices de lumière (2) et/ou les unités réceptrices de lumière (10) et comporte un grand côté (5) au niveau duquel les rayons de lumière (2a) sont autorisés à traverser, **caractérisé par** une unité de surpression (4) qui enferme les unités émettrices de lumière (2) et/ou les unités réceptrices de lumière (10) pour la préparation d'air comprimé,
dans laquelle l'unité de surpression (4) comprend des ouvertures (6, 9), qui sont agencées coaxialement aux axes optiques des unités émettrices de lumière (2) ou respectivement des unités réceptrices de lumière (10), et un raccord à surpression (4a), et est réalisée de telle façon que l'air comprimé introduit est susceptible d'être mené en direction des ouvertures (6, 9) et susceptible de sortir exclusivement via ces ouvertures (6, 9).

2. Barrière lumineuse selon la revendication 1, dans laquelle le raccord de surpression (4a) est prévu à une extrémité du boîtier (3).

3. Barrière lumineuse selon l'une des revendications précédentes, dans laquelle l'unité de surpression (4) comprend un cylindre (7), qui enveloppe le boîtier (3) de la barrière lumineuse (1), et qui est agencé entre une douille terminale (4b) et le raccord de surpression (4a).

4. Barrière lumineuse selon la revendication 3, dans laquelle l'air comprimé est prévu entre le boîtier (3) de la barrière lumineuse (1) et une paroi intérieure du cylindre (7), et sort exclusivement à travers les ouvertures (6, 9) sur le cylindre (7).

5. Barrière lumineuse selon la revendication 3 ou 4, dans laquelle l'unité de surpression (4) est formée par le cylindre (7), par la douille terminale (4b) et par le raccord de surpression (4a).

6. Barrière lumineuse selon l'une des revendications précédentes, dans laquelle les ouvertures (6) sont prévues sur le grand côté (5) de la barrière lumineuse (1), et le raccord de surpression (4a) est rapporté, sous forme d'un boîtier à bride, sur le boîtier (3) de la barrière lumineuse (1), de sorte que l'unité de surpression (4) est intégrée de manière intégrale dans la barrière lumineuse (1).

7. Barrière lumineuse selon l'une des revendications précédentes, dans laquelle l'unité de surpression (4) comprend du plexiglas transparent.

8. Barrière lumineuse selon l'une des revendications précédentes, dans laquelle un diamètre des ouvertures (6, 9) pour l'échappement d'air comprimé diminue au fur et à mesure de l'augmentation de la distance par rapport aux unités émettrices de lumière (2) ou aux unités réceptrices de lumière (10), de telle façon que l'air comprimé qui s'écoule à travers les ouvertures (6, 9) gagne en vitesse.

9. Barrière lumineuse selon l'une des revendications précédentes, dans laquelle les unités réceptrices de lumière (10) destinées à la réception des rayons de lumière (2a) sont agencées en alternance à côté des unités émettrices de lumière (2) destinées à l'émission des rayons de lumière (2a) dans la barrière lumineuse, et les ouvertures (6) associées aux unités émettrices de lumière (2) sont également agencées en alternance et en rangée par rapport aux ouvertures (9) associées aux unités réceptrices de lumière (10), et dans laquelle la barrière lumineuse (1) est agencée à l'opposé d'un réflecteur.

10. Barrière lumineuse selon l'une des revendications 1 à 8, dans laquelle les unités émettrices de lumière (2) sont prévues dans un boîtier (3) et les unités réceptrices de lumière (10) sont prévues dans un autre boîtier (3), et les deux boîtiers (3) sont agencés de manière opposée.
